(19) **Europäisches Patentamt European Patent Office Office européen des brevets**

(11) **EP 4 515 913 B1**

(12) **EUROPEAN PATENT SPECIFICATION**

(45) Date of publication and mention
of the grant of the patent:
**08.10.2025  Bulletin 2025/41**

(21) Application number: **22757258.3**

(22) Date of filing: **22.07.2022**

(51) International Patent Classification (IPC):
**H04W 24/02** $^{(2009.01)}$      **G06N 3/08** $^{(2023.01)}$

(52) Cooperative Patent Classification (CPC):
**H04W 24/02; G06N 3/045;** G06N 3/08

(86) International application number:
**PCT/EP2022/070689**

(87) International publication number:
**WO 2023/208394 (02.11.2023 Gazette 2023/44)**

(54) **CELLULAR NETWORK PERFORMANCE ESTIMATOR MODEL**

LEISTUNGSSCHÄTZUNGSMODELL FÜR ZELLULARES NETZWERK

MODÈLE D'ESTIMATEUR DE PERFORMANCE DE RÉSEAU CELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **27.04.2022  EP 22382404**

(43) Date of publication of application:
**05.03.2025  Bulletin 2025/10**

(73) Proprietor: **Telefonaktiebolaget LM Ericsson (publ)**
**164 83 Stockholm (SE)**

(72) Inventors:
• **MENDO MATEO, Adriano**
  **29006 Malaga Málaga (ES)**
• **OUTES CARNERO, Jose**
  **29620 Torremolinos Málaga (ES)**
• **RAMIRO MORENO, Juan**
  **29014 Malaga Málaga (ES)**
• **NG MOLINA, Yak**
  **29010 Malaga Málaga (ES)**
• **RUIZ AVILES, Jose Maria**
  **29010 Malaga Málaga (ES)**
• **MOREIRA MIJARES, Paulo Antonio**
  **29620 Malaga Málaga (ES)**
• **ISLAM RONY, Rakibul**
  **29010 Malaga Málaga (ES)**

(74) Representative: **Ericsson**
**Patent Development**
**Torshamnsgatan 21-23**
**164 80 Stockholm (SE)**

(56) References cited:
**WO-A1-2021/089864      US-A1- 2019 392 302**

• **ALESSIO ZAPPONE ET AL: "Wireless Networks Design in the Era of Deep Learning: Model-Based, AI-Based, or Both?", ARXIV.ORG, CORNELL UNIVERSITY LIBRARY, 201 OLIN LIBRARY CORNELL UNIVERSITY ITHACA, NY 14853, 5 February 2019 (2019-02-05), XP081369602**
• **PARERA CLAUDIA ET AL: "Transferring knowledge for tilt-dependent radio map prediction", 2018 IEEE WIRELESS COMMUNICATIONS AND NETWORKING CONFERENCE (WCNC), IEEE, 15 April 2018 (2018-04-15), pages 1 - 6, XP033355354, DOI: 10.1109/WCNC.2018.8377359**

## Description

Technical Field

This disclosure relates to training and using a performance estimator model to estimate the performance of a cellular network when one or more configuration parameters for one or more cells are changed.

Background

The network optimisation process for a cellular network (i.e. a network that has a plurality of cells for providing services to users) usually consists of modifying values of various configuration parameters at different levels (network, node, cell, etc.) with the aim of taking the network performance to an improved level.

Since this optimisation process involves many parameters at many network levels, it is a very challenging problem. In many cases a "digital twin" is used to predict the impact of suggested parameter modifications on the network performance before implementing any change. The digital twin is a simulation, representation or model of the network. The goal of the digital twin is to mimic the behaviour of the network as much as possible. In this way, different parameter proposals can be evaluated and estimated beforehand without risking damage to the real network, and then the best configuration found in the digital twin can be implemented in the network.

The current state of the art of the performance estimators for cellular networks based on digital twins can be divided into two main families. The first are legacy network simulators that are computer programs that try to model the network elements (user devices, antennas, links, nodes, air propagation, etc.). Using all these elements and their interactions, the performance of the network can be estimated before and after modifying the configuration parameters. Simulations are based typically on the Monte Carlo method and can be divided into two different categories, depending on whether the temporal dimension is considered (i.e. dynamic) or not (i.e. static). This has been the traditional approach used for many years before the advent of artificial intelligence (AI) models. An example of a network simulator is the Atoll LT/LTE-A Pro network planning software.

The second family of performance estimators are AI models. These are models generated using AI and attempt to predict the performance of the network in the event of a configuration parameter change. Typically, these models are trained using real data (supervised learning), corresponding to cases in which a real configuration parameter modification was made, and the performance impact measured.

Patent document US2019/392302 A1 teaches that a model may be trained by a neural network to approximate any arbitrary function without any task-specific programming. Neural network training may be used to "parameterize" the model based on the objective function, which includes determining an optimized neural network parameter for the model that enables the model to achieve the best approximation of the objective function based on the training data.

Patent document WO 2021/089864 A1 teaches computer implemented training of a policy model for specifying a configurable parameter of a telecommunications network. This configurable parameter may be e.g. antenna elevation.

The journal article by Alessio Zappone at al titled "Wireless Networks Design in the Era of Deep Learning: Model-Based, AI-Based, or Both?" teaches learning techniques in wireless communication networks. A system may be modelled as a deep Artificial Neural Network (ANN) using a cascaded encoder / decoder structure to reproduce the input data at the output. A synthetic channel model is used to provide a first training of the ANN. Next, this initial training is refined at the receiver based on the true channel characteristics.

The journal article by Claudia Parera et al titled "Transferring knowledge for tilt-dependent radio map prediction" teaches machine learning techniques in 5G networks. Collecting data to train models for all possible network configurations can be prohibitive. The solution is to use knowledge transfer, in which a machine learning model trained on a particular network configuration is used to predict a quantity of interest in a new, unknown setting.

There currently exist certain challenge(s). In particular, network simulators are usually difficult to calibrate, that is it is difficult to configure everything to provide the same performance as the real network. Other than that, real networks have many configuration parameters that control dozens of features, so it is necessary to model all those features correctly if any of those parameters are to be adjusted.

One drawback of AI-built models is that they require a data set to train, which is made of real samples of networks where configuration parameters have been modified and performance measured before and after parameter changes. Obtaining such a data set is not an easy task and can be quite expensive.

Summary

Certain aspects of the disclosure and their embodiments may provide solutions to the above, or other, challenges. This disclosure proposes an AI-driven performance estimator model for estimating the performance of a cellular network in the event that a value of a configuration parameter is modified in one or more cells. The change in the value of the configuration parameter can be performed in a single cell or in several cells at the same time, and the performance is estimated for all the cells, not only for the ones in which the configuration parameter has been modified.

Embodiments provide that the architecture of the performance estimator model is based on a combination of two different AI technologies in the same neural network: autoencoders and graph neural networks (GNN). To train the model, samples of the real network are required. However, using the new architecture described herein, it is not necessary to build a training data set by measuring performance before and after configuration parameter changes. Instead, different samples or snapshots of the networks can be used, where there is some variability of values of configuration parameters in different cells. Using this architecture for the performance estimator model, it is possible to estimate the impact of the change of a configuration parameter value in a cell on the performance of that cell and also of its neighbouring cells. Particular embodiments of this disclosure provide for a custom loss to be used in the autoencoder training process, which improves the performance of the model.

According to a first aspect, there is provided a computer-implemented method for training a performance estimator model for estimating the performance of a cellular network. The performance estimator model comprises an encoder stage comprising a plurality of encoders and a decoder stage comprising a plurality of decoders. The network comprises a plurality of cells, and the cellular network has a plurality of configuration parameters and a configuration parameter of interest that are each configurable per cell. The method comprises (i) obtaining a training data set, the training data set comprising measurements of a plurality of performance parameters for the plurality of cells, wherein different values of the configuration parameters are being used among the plurality of cells, wherein the training data set further comprises respective values of the plurality of configuration parameters for the plurality of cells; (ii) training the encoders to encode the training data set into a respective representation for each cell, wherein each encoder receives, for a respective cell, the measurements of the plurality of performance parameters and corresponding values of the plurality of configuration parameters for that cell, and wherein a layer of each of the plurality of encoders are interconnected as a neural network representing the cellular network such that information on relationships between pairs of cells in the cellular network is taken into account in the encoding; (iii) training the decoders to decode a respective representation to determine a subset of the plurality of performance parameters for the respective cell associated with the configuration parameter of interest, wherein each decoder receives the respective representation and a current value of the configuration parameter of interest, wherein a layer of each of the plurality of decoders are interconnected as a neural network representing the cellular network such that information on relationships between pairs of cells in the cellular network is taken into account in the decoding; (iv) determining a value of a loss metric that is based on a difference between the input training data set and the output of the decoders; and (v) repeating steps (ii), (iii) and (iv) to retrain the encoders and decoders to obtain an improved value of the loss metric.

According to a second aspect, there is provided a computer-implemented method for estimating performance of a cellular network using a performance estimator model trained according to the first aspect or any embodiment thereof. The method comprises (i) obtaining current measurements of a plurality of performance parameters for the plurality of cells in the cellular network and obtaining current values of the configuration parameters for the plurality of cells; (ii) determining one or more revised values of the configuration parameter of interest to use in one or more cells; and (iii) inputting the current measurements and the one or more revised values of the configuration parameter of interest into the trained performance estimator model and operating the trained performance estimator model to determine the set of key performance parameters indicating an effect of the one or more revised values of the configuration parameter of interest on the performance of the cellular network.

According to a third aspect, there is provided a computer program product comprising a computer readable medium having computer readable code embodied therein, the computer readable code being configured such that, on execution by a suitable computer or processor, the computer or processor is caused to perform the method according to the first aspect, the second aspect, or any embodiments thereof.

According to a fourth aspect, there is provided an apparatus configured to train a performance estimator model for estimating the performance of a cellular network. The performance estimator model comprises an encoder stage comprising a plurality of encoders and a decoder stage comprising a plurality of decoders. The network comprises a plurality of cells, and the cellular network has a plurality of configuration parameters and a configuration parameter of interest that are each configurable per cell. The apparatus is configured to (i) obtain a training data set, the training data set comprising measurements of a plurality of performance parameters for the plurality of cells, wherein different values of the configuration parameters are being used among the plurality of cells, wherein the training data set further comprises respective values of the plurality of configuration parameters for the plurality of cells; (ii) train the encoders to encode the training data set into a respective representation for each cell, wherein each encoder receives, for a respective cell, the measurements of the plurality of performance parameters and corresponding values of the plurality of configuration parameters for that cell, and wherein a layer of each of the plurality of encoders are interconnected as a neural network representing the cellular network such that information on relationships between pairs of cells in the cellular network is taken into account in the encoding; (iii) train the decoders to decode a respective representation to determine a subset of the plurality of performance parameters for the respective cell associated with the configuration parameter of interest, wherein each decoder receives the respective representation and a current value of the configuration parameter of interest, wherein a layer of each of the plurality of decoders are interconnected as a neural network representing the cellular network such that information on relationships between pairs of cells in the cellular network is taken into account in the decoding; (iv) determine a value of a loss metric that is based on a difference between the input training data set and the output of the decoders; and (v) repeat operations (ii), (iii) and (iv) to retrain the encoders and decoders to obtain an improved value of the loss metric.

Certain embodiments may provide one or more of the following technical advantage(s). One advantage is that no type of analytical model is required, as the performance estimator model is based on AI techniques. Another advantage is that it is not necessary to train the performance estimator model with a data set built by measuring performance before and after configuration parameter changes. Another advantage is that it allows the estimation of the performance of cells where the configuration parameters remain the same, while the configuration parameter is changed a neighbouring cell.

Brief Description of the Drawings

Some of the embodiments contemplated herein will now be described more fully with reference to the accompanying drawings, in which:

Fig. 1 shows an exemplary graph neural network data structure that can represent a cellular network;
Fig. 2 illustrates an exemplary architecture for a performance estimator model;
Fig. 3 illustrates an exemplary architecture for an encoder stage and a decoder stage;
Figs. 4(a) and 4(b) are graphs illustrating a recovery loss and correlation term respectively for a proof of concept performance estimator model;
Fig. 5 is a histogram of normalised values for predicted or guessed KPI values for a created test data set for the proof of concept performance estimator model;
Fig. 6 is a block diagram illustrating an open-radio access network (O-RAN) implementation of the techniques described herein;
Fig. 7 is a simplified block diagram of an apparatus according to some embodiments; and
Fig. 8 is a block diagram illustrating a virtualization environment in which functions implemented by some embodiments may be virtualized; and
Fig. 9 is a flow chart illustrating a method of training a performance estimator model according to some embodiments.

Detailed Description

As noted above, this disclosure proposes a performance estimator model for estimating the performance of a cellular network in the event that a value of a configuration parameter is modified in one or more cells. The change in the value of the configuration parameter can be performed in a single cell or in several cells at the same time, and the performance is estimated for all the cells, not only for the ones in which the configuration parameter has been modified.

It will be appreciated by those skilled in the art that the performance estimator model can be trained to estimate the performance of any type of cellular network. In particular, the cellular network can operate according to any type of radio access technology (RAT), including 2nd Generation (2G) communication standards, 3Rd Generation (3G) communication standards, 4th Generation (4G) communication standards, 5th Generation (5G) communication standards, etc.

As used herein, the term "configuration parameter" refers to any type of parameter that is configurable in or for a cell to adjust or change the performance or operation of that cell. The change or adjustment of the configuration parameter can be by the equipment provider (i.e. the manufacturer of the network node that is generating the cell), by the network operator, or by the network node itself. Exemplary configuration parameters include any of: antenna height (i.e. the height of the cell's antenna above the ground), , frequency (i.e. the frequency used for transmissions in the cell), bandwidth (i.e. the bandwidth available for transmissions in the cell), mechanical tilt (i.e. an angle of tilt of the cell's antenna), electrical tilt (i.e. an angle of electrical tilt of the cell's antenna), remote electrical tilt (RET), downlink (DL) transmission power (i.e. a transmission power used to transmit signals to a user equipment (UE)/wireless device), a P0 nominal Physical Uplink Shared Channel (PUSCH), and Cell Individual Offset.

Also as used herein, the term "performance parameter" refers to any type of parameter that can be measured or determined for a cell or for neighbouring cells, and whose value represents the performance of the cell in providing a service to users of the cell in the cellular network. The performance parameters can be measured by a network node that provides the cell (e.g. a base station, eNB, gNB, etc.), by a neighbouring network node (i.e. a network node that provides a neighbouring cell to the cell), or by a UE or wireless device that is using the cell or a neighbouring cell. Exemplary performance parameters include any of: traffic load, call setup success rate, call drop rate, availability, Reference Signal Received Power (RSRP), average RSRP, Reference Signal Received Quality (RSRQ), Average RSRQ, Channel Quality Indicator (CQI), spectral efficiency, user throughput, latency, handover success rate, and overlapping (i.e. an amount of area that is covered at the same time by the two cells belonging to the neighbour relation).

Finally, the term "configuration parameter of interest" or "configuration parameter to be tuned" refers to one of the configuration parameters that the performance estimator model is trained to provide a prediction for. That is, the performance estimator model is trained so that a new value or test value of the configuration parameter of interest can be input into the performance estimator model, and the performance estimator model provides an output indicating the effect of the new/test value on the performance of the cellular network. This effect can be provided in terms of predicted values for one or more performance parameters for the cell **in** which the configuration parameter is to be changed, and/or predicted values for one or more performance parameters for one or more cells neighbouring the cell in which the configuration parameter is to be changed.

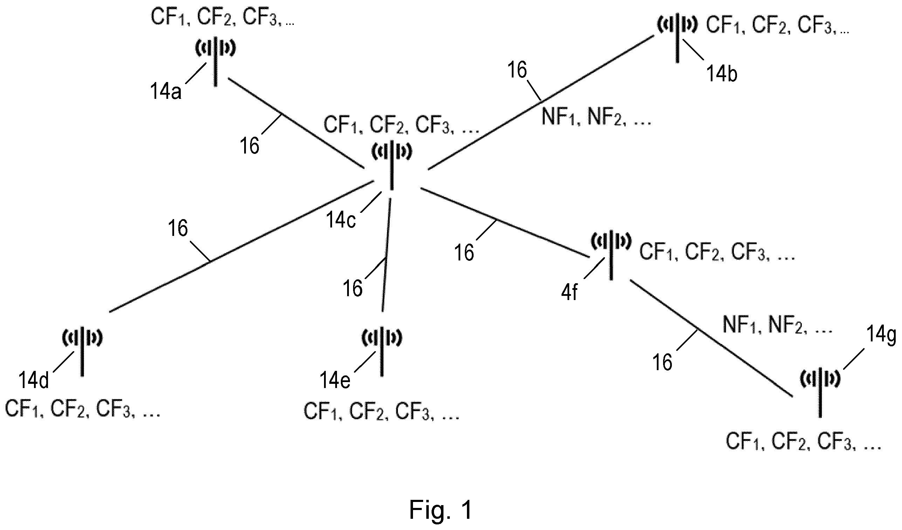

The performance estimator model is based on an autoencoder architecture, where a layer of the encoders are interconnected as a neural network, and a layer of the decoders are interconnected as a neural network. These interconnections enable information on the relationships between pairs of cells in the cellular network to be taken into account in the encoding and decoding processes. Particular embodiments provide that the neural network interconnections are in the form of a graph neural network (GNN). The GNN is a data structure that can represent the radio mobile (cellular) network, and an example is shown in Fig. 1.

The cellular network 12 is represented using two types of graph entities: vertices 14 and edges 16. A vertex 14 is a single node and an edge 16 extends between two nodes and defines a relation between the two nodes 14. An edge 16 can be directed (i.e. from one vertex 14 to another vertex 14, in that direction) or undirected (i.e. it associates two different nodes 14 but without any direction).

Thus, in this disclosure, the cellular network 12 is represented as a graph in which the cells are represented by the vertices 14, and the neighbour relations are represented by the edges 16. In the network 12 in Fig. 1, seven cells 14 are shown, each respectively labelled 4a-4g. Various edges 16 are shown between certain pairs of cells 14, but it will be appreciated that not all possible edges 16 are shown in Fig. 1. Neighbour relations 16 can be defined between two cells 14 in different ways: for example based on neighbour relations defined in the network topology database, based on distance between the cells 14, etc. The main point is that a neighbour relation is defined that represents some form of interaction between the two involved cells 14.

A certain number of features can be associated to cells 14, which are denoted cell features (CF) in Fig. 1, and a number of features can be associated to neighbour relations, which are denoted neighbour relation features (NF) in Fig. 1. The nature of the cell features or neighbour relation features can be very diverse, e.g. including geometrical information, values of configuration parameters, and/or values of performance parameters, etc.

Cell features can be stored as a matrix, in which the number of rows is the number of cells, and the number of columns is the number of features. In the case of a single neighbour relation feature, it can be stored in a square matrix, in which the number of rows and columns is the number of cells. It should be noted that if the network is large, then this neighbour relation feature matrix will be sparse because there will not be much or any interaction between two cells that are located far each other. In case there is more than one neighbour relation feature then additional storage structures will be required, e.g., using one matrix per neighbour relation feature, or using a 3D matrix (tensor), where the third dimension is used to distinguish different neighbour relation features.

As noted above with respect to the definitions of "configuration parameter" and "performance parameter", exemplary cell features can include geometrical information such as antenna height; configuration parameters such as frequency, bandwidth, mechanical tilt, electrical tilt, DL transmission power, and P0 Nominal PUSCH; and/or performance parameters such as Traffic Load, Call Setup Success Rate, Call Drop Rate, Availability, Average Reference Signal Received Power (RSRP), Average Reference Signal Received Quality (RSRQ), Channel Quality Indicator (CQI), Spectral Efficiency, User Throughput and/or Latency. Exemplary neighbour relations features can include geometrical information such as distance, and/or average inter-site distance, and/or whether the cells are co-sited (yes/no); configuration parameters such as cell individual offset; and/or performance parameters such as Handover Success Rate and/or Overlapping (i.e. an amount of area that is covered at the same time by the two cells belonging to the neighbour relation).

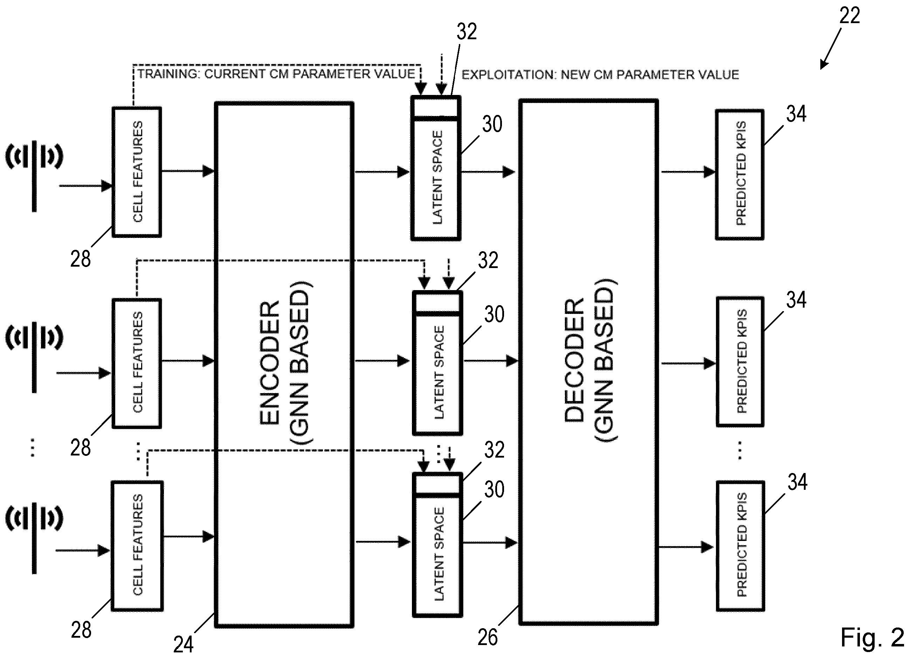

Fig. 2 illustrates an exemplary architecture for the performance estimator model 22 that is based on autoencoders and graph neural networks (GNN). The performance estimator model 22 comprises an encoder stage 24 that comprises a plurality of encoders, and a decoder stage 26 that comprises a plurality of decoders.

Some configuration parameters and/or performance parameters are selected per cell, including a configuration parameter of interest (i.e. the configuration parameter that is to be tuned using the performance estimator model). Apart from the value of the configuration parameter of interest, these form a training data set that are input cell features 28 that are input to the encoder stage 24. The features for a particular cell are input to a respective encoder in the encoder stage 24. In addition, although they are not shown in Fig. 2 for simplicity, some features per neighbour relation (pair of cells) are also input to the encoder stage 24, and these features are used in the GNN layer. All these features, per cell and per pair of cells, are the inputs of the encoder stage 24, representing a graph structure. The output of the encoder stage 24 is a representation 30 per cell that is composed of several latent features per cell, with a dimensionality typically lower than the dimensionality of the input features 28. This representation is also referred to as a "latent space" herein. These latent spaces 30/latent features are also the input for the decoder stage 26, together with the configuration parameter of interest 32 (the configuration parameter that is to be tuned). The architecture of the decoder stage 26 is quite similar to that of the encoder stage 24 (i.e. the decoder stage 26 is symmetric to the encoder stage 24), and the output of the decoder stage is a set 34 of Key Performance Indicators (KPIs) per cell, which are a subset of the input cell features 28 to the encoder stage 24. This subset 34 contains the KPIs to be predicted by the trained performance estimator model 22 when a new value of the configuration parameter of interest is tested by the trained performance estimator model 22.

At training time, since the current value of the configuration parameter to be tuned/simulated is introduced in between the encoder stage 24 and the decoder stage 26, the representation/latent features 30 will capture all the required information from the cellular network that has nothing to do with the configuration parameter to be tuned. The KPIs in the KPI set 34 output by the decoder stage 26 are intended to be as close as possible to those contained in the input features 28. The difference between the output 34 and the real KPIs constitutes the loss to be minimised in the training phase, using, for example, mean square error (MSE), or another form of loss metric. The loss metric is based on a difference between the input training data set and the output of the decoders.

The usage of GNN layers in the architecture 22 allows for the number of cells and number of cell neighbour relations to vary from one training sample to another, giving full flexibility and generalisation when training the performance estimator model 22.

Once the entire model 22 is trained, at the time of exploitation, different values can be tested for the configuration parameter of interest, and the performance estimator model 22 provides different predictions for the values of the KPIs 34. It should be noted that the configuration parameter of interest can be modified in one or more cells at the same time. In addition, it should be appreciated that the impact of the configuration parameter change can be measured in the KPIs of the cell in which the configuration parameter is changed, and in the KPIs of any cells neighbouring the cell in which the configuration parameter is changed.

A proof of concept (PoC) of the above performance estimator model 22 has been constructed in which the configuration parameter of interest is remote electrical tilt (RET). This configuration parameter is useful to select as it has a significant impact not only on the cell where the modification is applied, but also on its neighbouring cells. The training data set and test data sets were generated using a proprietary simulator (similar to Atoll LT/LTE-A Pro mentioned above)which is developed and maintained by the Ericsson community.

Initially a graph structure is generated that represents the (cellular) radio mobile network, and which comprises cell and neighbour relation features. The selected cell features are antenna height, average inter-site distance, frequency, bandwidth, mechanical tilt, electrical tilt (RET), Traffic Load, Call Setup Success Rate, Call Drop Rate, Availability, Average RSRP, Average RSRQ, CQI, Spectral Efficiency, User Throughput and Latency.

For neighbour relation features, only the overlapping is selected, and overlapping is defined as the percentage of measurement reports collected in the source cell in which the target cell is also detected, and where a measured RSRP is not smaller than a certain threshold related to the RSRP of the source cell. This overlapping feature will feed the adjacency matrix, using directed edges. It should be noted that the larger the portion of the network represented by the graph, the sparser the adjacency matrix.

For training, different graphs are collected representing different parts of the network. A single node can be present in several graphs at the same time. Also, the same portion of the network can be taken at different time windows to generate different graphs; some features are static, but others like the KPIs are dynamic and will vary over time. With this data set, the system represented in Fig. 2 was trained. The KPIs 34 at the output of the decoder stage 26 included the following ten performance parameters: Traffic Load, Call Setup Success Rate, Call Drop Rate, Availability, Average RSRP, Average RSRQ, CQI, Spectral Efficiency, User Throughput and Latency.

It should be noted that these KPIs are a subset of the cell input features, and many of them will be impacted by the configuration parameter of interest, the RET.

Since the number of KPIs to be predicted by the performance estimator model 22 is ten, the dimension of the latent space 30 will be typically lower than ten. At training time, the current RET value 32 is also concatenated to the latent space 30. In this way, the latent space 30 will include all the needed information coming from the network that has nothing to do with the RET. This is achieved due to the autoencoder principle, and adding the RET value 32 directly to the latent space 30.

Once the performance estimator model 22 is trained, it can be used for exploitation. In this phase, values for RET different from the current one(s) can be explored. A portion of the network can be considered, and its graph can be generated. With all the cell/neighbour relation features from the graph (the current RET values are used) the encoder stage 24 is executed. This will produce a representation/latent space 30 per cell. Then, the modified RET values 32 are added (concatenated) to the latent space 30. The RET value of a single cell may be modified, the RET value for several cells may be modified at the same time, as desired. With the latent space 30 and the new RET value(s) 32, the decoder stage 26 is executed and the predicted KPIs 34 are obtained for all the cells. It should be noted that the predicted KPIs 34 are even obtained for those cells in which the RET value is not modified. This is achieved due to the use of the neural network/GNN.

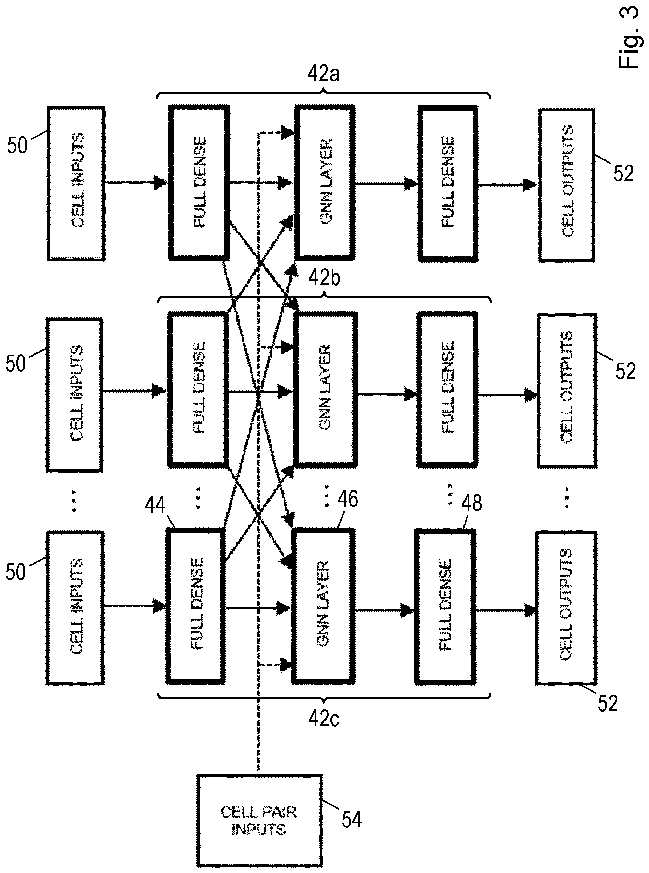

Fig. 3 illustrates an exemplary architecture 40 for the encoder stage and decoder stage. That is, the encoder stage 24 in Fig. 2 can be implemented using architecture 40 as shown in Fig. 3, and/or the decoder stage 26 in Fig. 2 can be implemented using architecture 40 as shown in Fig. 3.

The encoder stage 24 and decoder stage 26 comprise a plurality of encoders and decoders respectively. Architecture 40 shows three encoders/decoders 42, labelled 42a, 42b and 42c respectively. Each encoder/decoder 42 is provided for handling the data/parameters for a single cell, and each encoder/decoder 42 comprises three processing layers 44, 46, 48, inputs 50 and outputs 52.

When used as an encoder, the inputs 50 comprise cell features (i.e. values of configuration parameters and values of performance parameters) for the cell. When used as a decoder, the inputs 50 comprise the representation/latent space and the value of the configuration parameter of interest for the cell.

The first layer 44 can be a full dense subnetwork, which takes only the features (parameters) of the cell under evaluation as input. The second layer 46 is a neural network layer, e.g. a graph neural network layer, which not only takes the output of the previous layer 44 for the cell under evaluation as input, but also the output of the previous layer 44 for all the neighbouring cells. For this purpose, the neighbour relation features 54 are input/used. A layer such as the ones described in the following two papers can be used here: "Dynamic Edge-Conditioned Filters in Convolutional Neural Networks on Graphs" by Martin Simonovsky and Nikos Komodakis, ArXiv, April 2017: https://arxiv.org/abs/1704.02901; and "Graph Attention Networks" by Petar Veličković, Guillem Cucurull, Arantxa Casanova, Adriana Romero, Pietro Liò, and Yoshua Bengio, ArXiv, October 2017: https://arxiv.org/abs/1710.10903.

The third layer 48 is another full dense subnetwork, which takes only the output of the neural network layer 46 for the cell under evaluation as input.

When used as an encoder, the cell outputs 52 comprise the representation/latent space 30 of the cell under evaluation by that encoder. When used as a decoder, the outputs 52 comprise KPIs to be predicted for the cell under evaluation by that decoder.

It should be noted that although there is an encoder 42 and decoder 42 per cell, in every encoder 42 and decoder 42 the neural network weights for the layers 44, 46 and 48 are exactly the same for all cells. In this way the complexity of the performance estimator model is independent of the number of cells. This is achieved due to the usage of a neural network (e.g. GNN) in the architecture 40.

When training the proposed architecture shown in Fig. 2 and 3, since the dimension of the representation/latent space 30 is lower than the dimension of the input cell features 28 and the current value of the configuration parameter of interest 32 is also added as input for the decoder stage 26, there should be no correlation between the configuration parameter of interest and the latent features 30. However, in practice, this does not happen, perhaps due to some numerical effects that introduce some information about the current value of the configuration parameter of interest into the latent space 30, which is noise for the prediction and makes it less accurate.

To overcome this problem, in some embodiments the loss metric is modified to measure and minimise the aforementioned correlation effect. The typical recovery loss term (mean square error between input and output) is retained, but a new term is added to consider the correlation between the latent space 30 and the value of the configuration parameter of interest 32, and the training process aims to minimise both terms at the same time. For that purpose, different weights can be used for the two terms, and those weights can be considered as hyperparameters. Two embodiments of this correlation term are described below.

In a first embodiment, there is a cross-correlation between the original value of the configuration parameter of interest and the predicted value of the configuration parameter using a linear regression with the latent features. This can be expressed mathematically as:

$$cross_{correlation} = \frac{\sum\left[\left(cm_{orig} - \overline{cm_{orig}}\right) \cdot \left(cm_{linreg} - \overline{cm_{linreg}}\right)\right]}{\sqrt{\sum\left(cm_{orig} - \overline{cm_{orig}}\right)^2 \cdot \sum\left(cm_{linreg} - \overline{cm_{linreg}}\right)^2}} \qquad (1)$$

where $cm_{orig}$ is a (num_batch_samples x 1) vector containing the original values for the configuration parameter, $cm_{linreg} = L \times ((L^T \times L)^{-1} \times (L^T \times cm_{orig}))$, with dimension (num_batch_samples x 1) (as described in A Matrix Formulation of the Multiple Regression Model, Applied Regression Analysis, PennState Eberly College of Science: https://online.stat.psu.edu/stat462/node/132/) and L is a (num_batch_samples x latent_space_dim) matrix containing the latent features.

In a second embodiment, a mean cosine similarity between the original value of the configuration parameter and each of the features in the latent space is determined. This can be expressed mathematically as:

$$cosine\_similarity = \frac{\sum_{i=1}^{latent\_space\_dim}\left[\sum\left(\frac{cm_{orig} - \overline{cm_{orig}}}{\left\|cm_{orig} - \overline{cm_{orig}}\right\|_2} \cdot \frac{L_i - \overline{L_i}}{\left\|L_i - \overline{L_i}\right\|_2}\right)\right]}{latent\_space\_dim} \qquad (2)$$

where $cm_{orig}$ and L are defined in the same way as the first embodiment above, $L_i$ is the i-th column vector for matrix L, and $\|\cdot\|_2$ is the Euclidean norm.

The two correlation methods have been tested and provided a similar performance.

Relative weights for both losses (recovery loss and correlation loss) are used as hyperparameters for the training process.

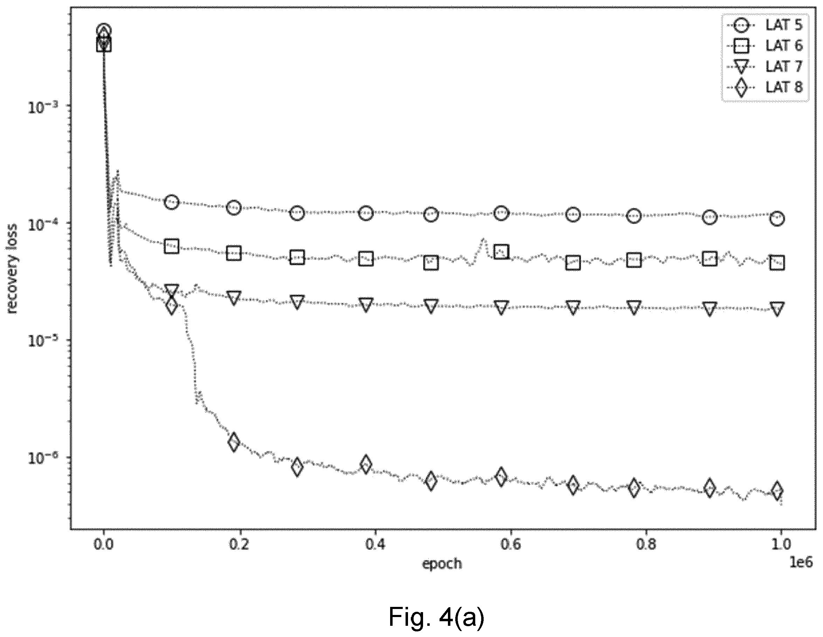

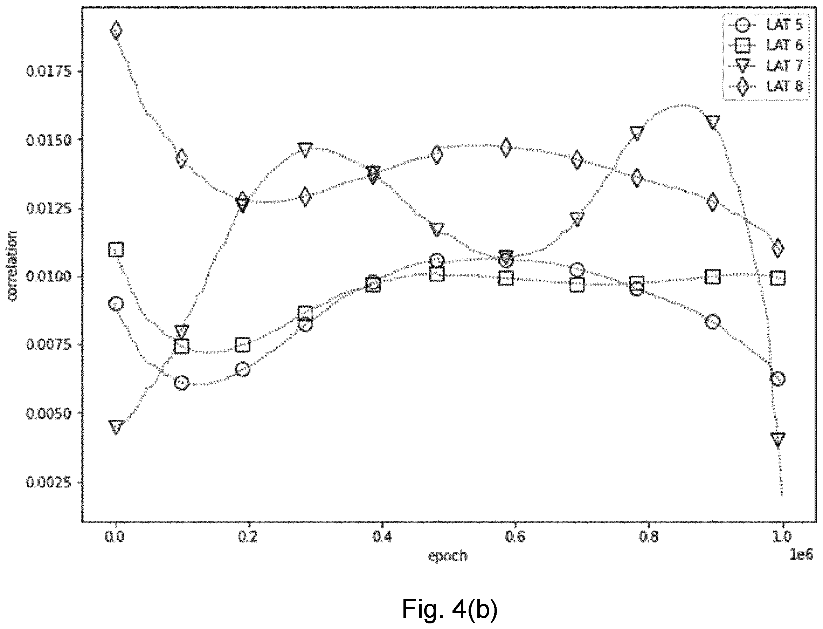

Using the architecture in the proof of concept described above (where the configuration parameter of interest is remote electrical tilt), a training process has been performed for different numbers of dimensions of the latent space (5, 6, 7 and 8) considering that the number of KPIs per cell to be predicted is 9. The results are shown in Fig. 4. The graph in Fig. 4(a) represents the recovery loss along the different epochs of the training process. It can be seen that the results are typically saturated starting on epoch 200K and the recovery loss is lower the higher the number of dimensions of the latent space (where LAT 5 is the 5-dimensional latent space, LAT 6 is the 6-dimensional latent space, etc.), which is the expected behaviour. The graph in Fig. 4(b) represents the correlation term, and specifically cross-correlation. The cross-correlation values shown in the graph are fairly close to zero, indicating that the training process is working as expected and there is no information about the configuration parameter of interest included in the latent space.

In an alternative embodiment, the conditional variational autoencoder (CVAE) concept introduced in "Learning Structured Output Representation using Deep Conditional Generative Models" by Kihyuk Sohn, Honglak Lee, Xinchen Yan, in Advances in Neural Information Processing Systems 28 (NIPS 2015): https://papers.nips.cc/paper/2015/hash/8d55a249e6baa5c06772297520da2051-Abstract.html can be incorporated into the performance estimator model architecture instead of the standard autoencoder. In this case, the difference to the architecture presented in Fig. 2 is that the latent features are now considered to follow a Gaussian distribution and the encoders in the encoder stage try to estimate the mean and variance of that distribution, to give two indicators per latent feature, so the number of estimators will be twice the dimension of the latent space. The loss in the CVAE architecture is also divided into two terms, the recovery loss, and the so-called Kullback-Leibler divergence. This last term attempts to measure the loss of information due to the assumption that the latent space follows a Gaussian distribution.

One advantage of the techniques described herein (whether using a 'standard' autoencoder or a CVAE) is that in the training process it is not necessary to build a training data set with samples that measure the impact before and after a value of a configuration parameter is changed. Instead, only different network snapshots are required. However, some spatial variability of the value of the configuration parameter of interest is also required. The principle here is that the performance estimator model will try to estimate the impact of a configuration parameter change in one cell with the information learned in other cells in different parts of the network.

To evaluate the techniques described herein, a 'test' training data set can be created in a different way, this time measuring the impact of the change in the configuration parameter of interest, i.e. by obtaining a snapshot before and after the change. The impact can be measured in the same cell where the configuration parameter is modified and/or in a neighbouring cell.

To compare how accurately the KPIs are predicted when a configuration parameter is modified in a cell, a normalisation process can be performed. Given the KPI values before and after the parameter change, a linear transformation can be applied in such a way that the KPI value "before" is moved to 0 and the KPI value "after" is moved to 100. In this way, the optimal KPI value for the prediction is 100. A value between 0 and 100 means that the KPI change is predicted in the right direction, but the actual change is greater than predicted. A value higher than 100 means that the KPI change is predicted in the right direction, but the actual change is lower than predicted. On the other hand, a value less than 0 means that the predicted change is in the opposite direction to the actual change, i.e., the wrong direction. This last case is the most problematic and erroneous.

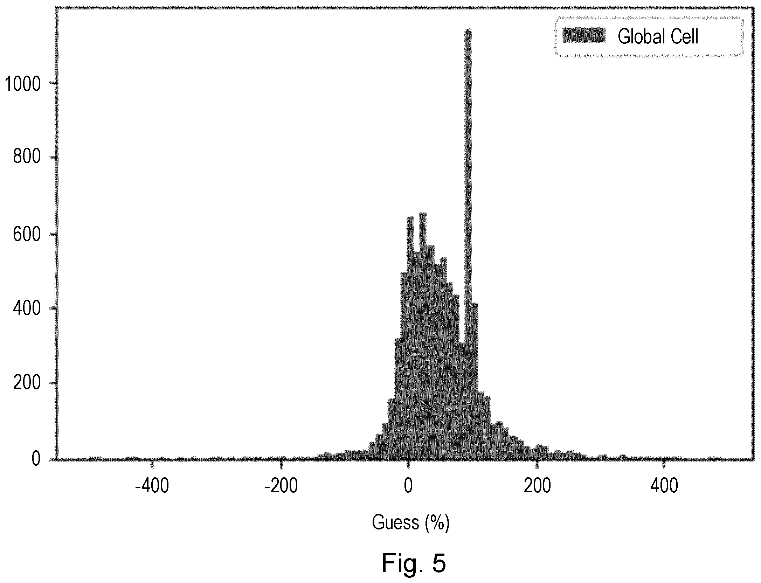

Fig. 5 shows a histogram of the normalised values for all the predicted or guessed KPI values for a created test data set for the proof of concept performance estimator model, where the performance is evaluated with the trained model. Having more or less samples around 100 is an indicator of how good or bad the prediction is. Thus, Fig. 5 shows that most KPI values were predicted in the right direction, with many being accurate, as indicated by the peak at around 100%.

A useful metric that can be utilised to measure the performance of the performance estimator model is the error probability, which is defined as the proportion of samples lower than 0 out of the total number of samples. This error probability is summarised in Table 1. for the PoC performance estimator model. The two architectures described here have been tested, i.e. one based on the normal autoencoder (GNN-AE) and the other based on the CVAE (GNN-CVAE). Likewise, different metrics have been obtained for the case in which the KPIs are estimated in the same cell where the configuration parameter change has been performed and for the case in which the KPIs are evaluated in a neighbouring cell.

Table 1

| Error probability (%) | GNN-AE | GNN-CVAE |
|---|---|---|
| Cell with configuration parameter change | 16.8% | 17.2% |
| Neighbouring cell | 27.4% | 29.4% |

When training the GNN-AE, the best results were obtained using both loss terms (recovery loss and correlation loss), but when training the GNN-CVAE, the best results were obtained without using the Kullback-Leibler divergence term. It should be noted that the GNN-AE architecture provides slightly better performance than the GNN-CVAE architecture. It is also important to note that estimating the impact of a configuration parameter change is significantly more difficult in a neighbour cell than in the cell in the which the configuration parameter change is effected. Table 1 summarises the average of all the KPIs so, depending on nature of the KPI, there will be some with a better prediction error (even lower than 5%) and others with a worse prediction error.

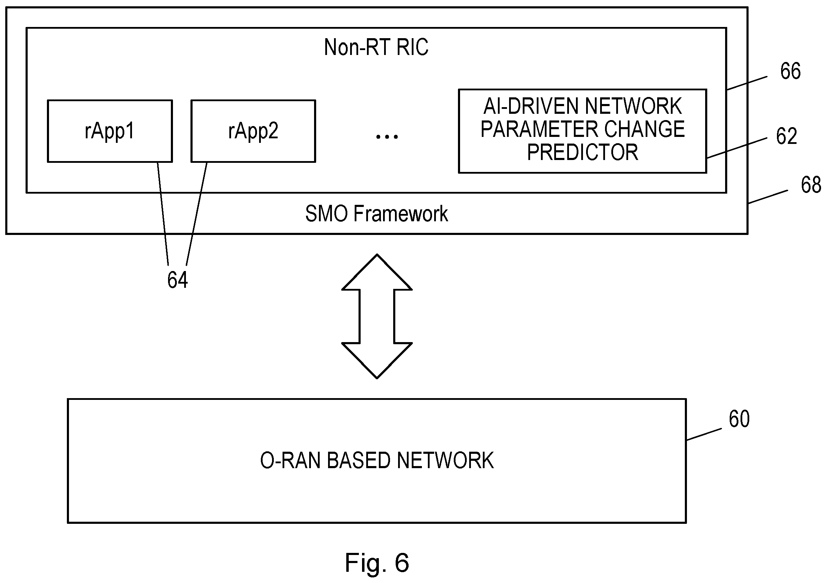

Fig. 6 is a block diagram illustrating an open-radio access network (O-RAN) implementation of the techniques described herein. Fig. 6 shows an O-RAN based network 60, where the performance estimator model described herein is implemented as a single "rApp" 62 (other rApps 64 are also shown) in a Non Real-Time (Non-RT) Radio Access Network Intelligent Controller (RIC) 66 that is located in a Service Management & Orchestrator (SMO) Framework 68 of the O-RAN architecture.

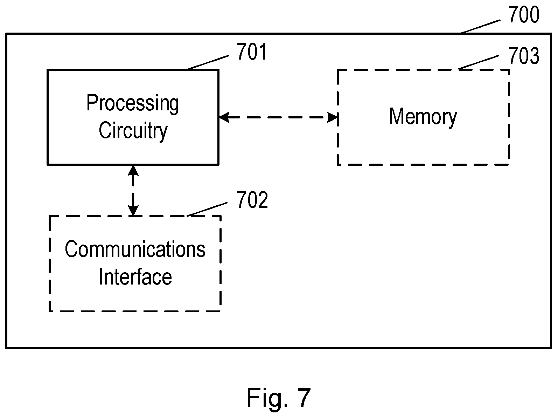

Fig. 7 is a simplified block diagram of an apparatus 700 according to some embodiments that can be used to implement the techniques described herein. The apparatus 700 can be any type of network node, computer, server or other computing device.

The apparatus 700 comprises processing circuitry (or logic) 701. It will be appreciated that the apparatus 700 may comprise one or more virtual machines running different software and/or processes. The apparatus 700 may therefore comprise, or be implemented in or as one or more servers, switches and/or storage devices and/or may comprise cloud computing infrastructure that runs the software and/or processes.

The processing circuitry 701 controls the operation of the apparatus 700 to implement the methods of training a performance estimator model and/or methods of estimating performance of a cellular network using a trained performance estimator model described herein. The processing circuitry 701 can comprise one or more processors, processing units, multi-core processors or modules that are configured or programmed to control the apparatus 700 in the manner described herein. In particular implementations, the processing circuitry 701 can comprise a plurality of software and/or hardware modules that are each configured to perform, or are for performing, individual or multiple steps of the method described herein in relation to the apparatus 700.

The apparatus 700 may also comprise a communications interface 702. The communications interface 702 is for use in enabling communications with other nodes, apparatus, computers, servers, etc. For example, the communications interface 702 can be configured to transmit to and/or receive from other apparatus or nodes requests, acknowledgements, information, data, signals, or similar. The communication interface 702 can use any suitable communication technology.

The processing circuitry 701 may be configured to control the communications interface 702 to transmit to and/or receive from other apparatus or nodes, etc. requests, acknowledgements, information, data, signals, or similar, according to the methods described herein.

The apparatus 700 may comprise a memory 703. In some embodiments, the memory 703 can be configured to store program code that can be executed by the processing circuitry 701 to perform the method described herein in relation to the apparatus 700. Alternatively or in addition, the memory 703 can be configured to store any requests, acknowledgements, information, data, signals, or similar that are described herein. The processing circuitry 701 may be configured to control the memory 703 to store such information therein.

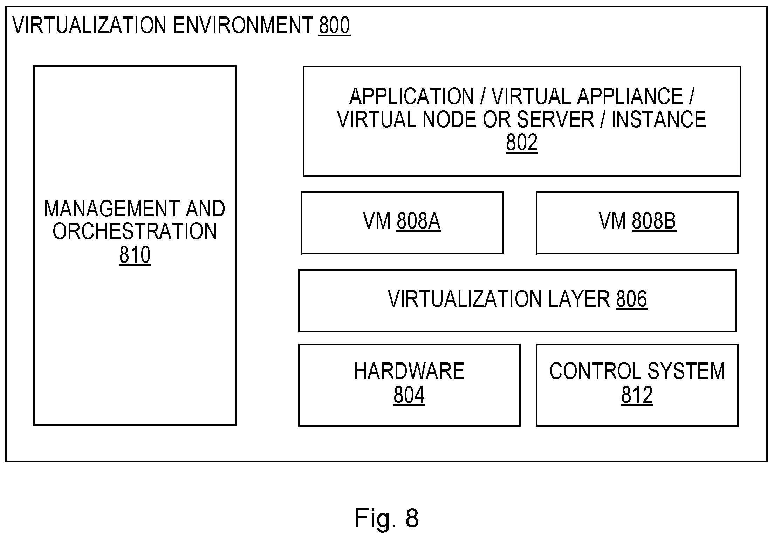

Fig. 8 is a block diagram illustrating a virtualization environment 800 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. In particular, virtualization can be applied to an apparatus as described herein. Some or all of the functions described herein may be implemented as virtual components executed by one or more virtual machines (VMs) implemented in one or more virtual environments 800 hosted by one or more of hardware nodes, such as a hardware computing device that operates as a core network node. In further embodiments, the node may be entirely virtualized.

Applications 802 (which may alternatively be called software instances, virtual appliances, network functions, virtual nodes, virtual network functions, etc.) are run in the virtualization environment 800 to implement some of the features, functions, and/or benefits of some of the embodiments disclosed herein.

Hardware 804 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 806 (also referred to as hypervisors or virtual machine monitors (VMMs)), provide VMs 808a and 808b (one or more of which may be generally referred to as VMs 808), and/or perform any of the functions, features and/or benefits described in relation with some embodiments described herein. The virtualization layer 806 may present a virtual operating platform that appears like networking hardware to the VMs 808.

The VMs 808 comprise virtual processing, virtual memory, virtual networking or interface and virtual storage, and may be run by a corresponding virtualization layer 806. Different embodiments of the instance of a virtual appliance 802 may be implemented on one or more of VMs 808, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 808 may be a software implementation of a physical machine that runs programs as if they were executing on a physical, non-virtualized machine. Each of the VMs 808, and that part of hardware 804 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 808 on top of the hardware 804 and corresponds to the application 802.

Hardware 804 may be implemented in a standalone network node with generic or specific components. Hardware 804 may implement some functions via virtualization. Alternatively, hardware 804 may be part of a larger cluster of hardware (e.g. such as in a data center or customer premises equipment - CPE) where many hardware nodes work together and are managed via management and orchestration 810, which, among others, oversees lifecycle management of applications 802.

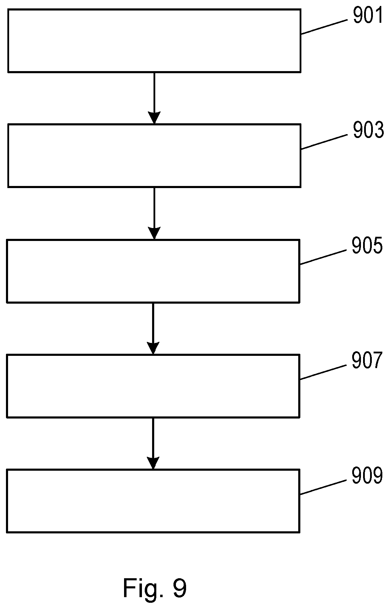

The flow chart in Fig. 9 illustrates a method of training a performance estimator model for estimating the performance of a cellular network according to various embodiments described herein. The method can be performed by any suitably configured computer or processor, for example in response to executing computer-readable code embodied or otherwise stored on a computer-readable medium. In some embodiments, the method in Fig. 9 can be performed by the rApp 62 in Fig. 6, the apparatus 700 in Fig. 7 or the virtualization environment 800 in Fig. 8.

The performance estimator model comprises an encoder stage 24 comprising a plurality of encoders and a decoder stage 26 comprising a plurality of decoders. The network comprises a plurality of cells, and the cellular network has a plurality of configuration parameters and a configuration parameter of interest that are each configurable per cell. The configuration parameter of interest is not one of the plurality of configuration parameters.

In some embodiments, the plurality of performance parameters are parameters that represent the performance of the cell in providing a service to users of the cellular network. In some embodiments, the plurality of performance parameters can comprise one or more of: traffic load, call setup success rate, call drop rate, availability, RSRP, average RSRP, RSRQ, Average RSRQ, CQI, spectral efficiency, user throughput, latency, handover success rate and overlapping.

In some embodiments, the plurality of configuration parameters are parameters that are configurable per cell to adjust the performance of the cell. In some embodiments, the plurality of configuration parameters can comprise one or more of: antenna height, frequency, bandwidth, mechanical tilt, electrical tilt, RET, downlink transmission power, P0 nominal PUSCH, and Cell Individual Offset.

In a first step, step 901, a training data set is obtained. The training data set comprises measurements of a plurality of performance parameters for the plurality of cells. Different values of the configuration parameters are being used among the plurality of cells, and the training data set further comprises respective values of the plurality of configuration parameters for the plurality of cells.

In step 903, the encoders are trained to encode the training data set into a respective representation for each cell. Each encoder receives, for a respective cell, the measurements of the plurality of performance parameters and corresponding values of the plurality of configuration parameters for that cell. A layer of each of the plurality of encoders are interconnected as a neural network representing the cellular network such that information on relationships between pairs of cells in the cellular network is taken into account in the encoding. In some embodiments, the representation is considered to follow a Gaussian distribution, and the respective representation for each cell comprises an estimate of a mean and variance of the Gaussian distribution.

In step 905, the decoders are trained to decode a respective representation to determine a subset of the plurality of performance parameters for the respective cell associated with the configuration parameter of interest. Each decoder receives the respective representation and a current value of the configuration parameter of interest. A layer of each of the plurality of decoders are interconnected as a neural network representing the cellular network such that information on relationships between pairs of cells in the cellular network is taken into account in the decoding.

In step 907, a value of a loss metric is determined that is based on a difference between the input training data set and the output of the decoders.

In some embodiments, the loss metric is a MSE metric. In some embodiments, the loss metric comprises a MSE term and a correlation term representing a correlation between the representations and the current value of the configuration parameter of interest. In these embodiments, step 909 can comprise repeating steps 903, 905 and 907 to retrain the encoders and decoders to minimise the MSE term and the correlation term. In these embodiments, the correlation term can be a cross-correlation between the current value of the configuration parameter of interest and a predicted value of the configuration parameter of interest using a linear regression. In alternative embodiments, the correlation term can be a mean cosine similarity between the current value of the configuration parameter of interest and the representations.

In step 909, steps 903, 905 and 907 are repeated to retrain the encoders and decoders to obtain an improved value of the loss metric.

In some embodiments, the respective layer of the plurality of encoders and respective layer of the plurality of decoders are interconnected as a GNN.

Once the performance estimator model has been trained as described above, the performance of the cellular network can be estimated using the performance estimator model.

The trained performance estimator model can be used as follows:

Firstly, current measurements are obtained of a plurality of performance parameters for the plurality of cells in the cellular network and current values are obtained of the configuration parameters for the plurality of cells.

Next, one or more revised values of the configuration parameter of interest are determined to use in one or more cells.

Then, the current measurements and the one or more revised values of the configuration parameter of interest are input into the trained performance estimator model. The trained performance estimator model operates to determine the set of key performance parameters that indicate an effect of the one or more revised values of the configuration parameter of interest on the performance of the cellular network.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure.

## Claims

1. A computer-implemented method for training a performance estimator model (22) for estimating the performance of a cellular network, wherein the performance estimator model (22) comprises an encoder stage (24) comprising a plurality of encoders and a decoder stage (26) comprising a plurality of decoders, wherein the network comprises a plurality of cells, and wherein the cellular network has a plurality of configuration parameters and a configuration parameter of interest that are each configurable per cell, the method comprising:

   (i) obtaining (901) a training data set, the training data set comprising measurements of a plurality of performance parameters for the plurality of cells, wherein different values of the configuration parameters are being used among the plurality of cells, wherein the training data set further comprises respective values of the plurality of configuration parameters for the plurality of cells;
   (ii) training (903) the encoders to encode the training data set into a respective representation for each cell, wherein each encoder receives, for a respective cell, the measurements of the plurality of performance parameters and corresponding values of the plurality of configuration parameters for that cell, and wherein a layer of each of the plurality of encoders are interconnected as a neural network representing the cellular network such that information on relationships between pairs of cells in the cellular network is taken into account in the encoding;
   (iii) training (905) the decoders to decode a respective representation to determine a subset of the plurality of performance parameters for the respective cell associated with the configuration parameter of interest, wherein each decoder receives the respective representation and a current value of the configuration parameter of interest, wherein a layer of each of the plurality of decoders are interconnected as a neural network representing the cellular network such that information on relationships between pairs of cells in the cellular network is taken into account in the decoding;
   (iv) determining (907) a value of a loss metric that is based on a difference between the input training data set and the output of the decoders; and
   (v) repeating (909) steps (ii), (iii) and (iv) to retrain the encoders and decoders to obtain an improved value of the loss metric.

2. The method as claimed in claim 1, wherein the plurality of performance parameters are parameters that represent the performance of the cell in providing a service to users of the cellular network.

3. The method as claimed in any of claims 1 or 2, wherein the plurality of configuration parameters are parameters that are configurable per cell to adjust the performance of the cell.

4. The method as claimed in any of claims 1-3, wherein the configuration parameter of interest is not one of the plurality of configuration parameters.

5. The method as claimed in any of claims 1-4, wherein the respective layer of the plurality of encoders and respective layer of the plurality of decoders are interconnected as a graph neural network, GNN.

6. The method as claimed in any of claims 1-5, wherein the loss metric is a mean square error, MSE, metric.

7. The method as claimed in any of claims 1-6, wherein the loss metric comprises a mean square error, MSE, term and a correlation term representing a correlation between the representations and the current value of the configuration parameter of interest.

8. The method as claimed in claim 7, wherein step (v) (909) comprises repeating steps (ii), (iii) and (iv) to retrain the encoders and decoders to minimise the MSE term and the correlation term.

9. The method as claimed in claim 7 or 8, wherein the correlation term is a cross-correlation between the current value of the configuration parameter of interest and a predicted value of the configuration parameter of interest using a linear regression.

10. The method as claimed in claim 7 or 8, wherein the correlation term is a mean cosine similarity between the current value of the configuration parameter of interest and the representations.

11. The method as claimed in any of claims 1-10, wherein the representation is considered to follow a Gaussian distribution, and wherein the respective representation for each cell comprises an estimate of a mean and variance of the Gaussian distribution.

12. A computer-implemented method for estimating performance of a cellular network using a performance estimator model (22) trained as claimed in any of claims 1-11, wherein the cellular network comprises a plurality of cells, and wherein the cellular network has a plurality of configuration parameters that are configurable per cell, the method comprising:

(i) obtaining current measurements of a plurality of performance parameters for the plurality of cells in the cellular network and obtaining current values of the configuration parameters for the plurality of cells;
(ii) determining one or more revised values of the configuration parameter of interest to use in one or more cells; and
(iii) inputting the current measurements and the one or more revised values of the configuration parameter of interest into the trained performance estimator model (22) and operating the trained performance estimator model (22) to determine the set of key performance parameters indicating an effect of the one or more revised values of the configuration parameter of interest on the performance of the cellular network.

13. A computer program product comprising a computer readable medium having computer readable code embodied therein, the computer readable code being configured such that, on execution by a suitable computer or processor, the computer or processor is caused to perform the method of any of claims 1-12.

14. An apparatus (700) configured to train a performance estimator model (22) for estimating the performance of a cellular network, wherein the performance estimator model (22) comprises an encoder stage (24) comprising a plurality of encoders and a decoder stage (26) comprising a plurality of decoders, wherein the network comprises a plurality of cells, and wherein the cellular network has a plurality of configuration parameters and a configuration parameter of interest that are each configurable per cell, the apparatus (700) configured to:

(i) obtain a training data set, the training data set comprising measurements of a plurality of performance parameters for the plurality of cells, wherein different values of the configuration parameters are being used among the plurality of cells, wherein the training data set further comprises respective values of the plurality of configuration parameters for the plurality of cells;

(ii) train the encoders to encode the training data set into a respective representation for each cell, wherein each encoder receives, for a respective cell, the measurements of the plurality of performance parameters and corresponding values of the plurality of configuration parameters for that cell, and wherein a layer of each of the plurality of encoders are interconnected as a neural network representing the cellular network such that information on relationships between pairs of cells in the cellular network is taken into account in the encoding;

(iii) train the decoders to decode a respective representation to determine a subset of the plurality of performance parameters for the respective cell associated with the configuration parameter of interest, wherein each decoder receives the respective representation and a current value of the configuration parameter of interest, wherein a layer of each of the plurality of decoders are interconnected as a neural network representing the cellular network such that information on relationships between pairs of cells in the cellular network is taken into account in the decoding;

(iv) determine a value of a loss metric that is based on a difference between the input training data set and the output of the decoders; and

(v) repeat operations (ii), (iii) and (iv) to retrain the encoders and decoders to obtain an improved value of the loss metric.

**Patentansprüche**

1. Computerimplementiertes Verfahren zum Trainieren eines Leistungsschätzungsmodells (22) zum Schätzen der Leistung eines Mobilfunknetzes, wobei das Leistungsschätzungsmodell (22) eine Codiererstufe (24) mit einer Mehrzahl von Codierern und eine Decodiererstufe (26) mit einer Mehrzahl von Decodierern umfasst, wobei das Netz eine Mehrzahl von Zellen umfasst, und wobei das Mobilfunknetz eine Mehrzahl von Konfigurationsparametern und einen Konfigurationsparameter von Interesse aufweist, die jeweils pro Zelle konfigurierbar sind, wobei das Verfahren umfasst:

(i) Erhalten (901) eines Trainingsdatensatzes, wobei der Trainingsdatensatz Messungen einer Mehrzahl von Leistungsparametern für die Mehrzahl von Zellen umfasst, wobei verschiedene Werte der Konfigurationsparameter unter der Mehrzahl von Zellen verwendet werden, wobei der Trainingsdatensatz ferner jeweilige Werte der Mehrzahl von Konfigurationsparametern für die Mehrzahl von Zellen umfasst;

(ii) Trainieren (903) der Codierer zum Codieren des Trainingsdatensatzes in eine entsprechende Darstellung für jede Zelle, wobei jeder Codierer für eine jeweilige Zelle die Messungen der Mehrzahl von Leistungsparametern und entsprechenden Werte der Mehrzahl von Konfigurationsparametern für diese Zelle empfängt, und wobei eine Schicht von jeder der Mehrzahl von Codierern als neuronales Netz miteinander verbunden ist, das das Mobilfunknetz darstellt, so dass Informationen über Beziehungen zwischen Zellpaaren im Mobilfunknetz bei der Codierung berücksichtigt werden;

(iii) Trainieren (905) der Decodierer zum Decodieren einer jeweiligen Darstellung, um eine Teilmenge der Mehrzahl von Leistungsparametern für die jeweilige Zelle zu bestimmen, die mit dem Konfigurationsparameter von Interesse verknüpft ist, wobei jeder Decodierer die jeweilige Darstellung und einen aktuellen Wert des Konfigurationsparameters von Interesse empfängt, wobei eine Schicht von jedem der Mehrzahl von Decodierern als neuronales Netz miteinander verbunden ist, das das Mobilfunknetzwerk darstellt, so dass Informationen über Beziehungen zwischen Zellpaaren im Mobilfunknetz bei der Decodierung berücksichtigt werden;

(iv) Bestimmen (907) eines Wertes einer Verlustmetrik, der auf einer Differenz zwischen dem eingegebenen Trainingsdatensatz und der Ausgabe der Decodierer basiert; und

(v) Wiederholen (909) der Schritte (ii), (iii) und (iv), um die Codierer und Decodierer neu zu trainieren, um einen verbesserten Wert der Verlustmetrik zu erhalten.

2. Verfahren nach Anspruch 1, wobei die Mehrzahl von Leistungsparametern Parameter sind, die die Leistung der Zelle bei der Bereitstellung eines Dienstes für Benutzer des Mobilfunknetzes darstellen.

3. Verfahren nach einem der Ansprüche 1 oder 2, wobei die Mehrzahl von Konfigurationsparametern Parameter sind, die pro Zelle konfigurierbar sind, um die Leistung der Zelle anzupassen.

4. Verfahren nach einem der Ansprüche 1 bis 3, wobei der Konfigurationsparameter von Interesse nicht aus der Mehrzahl von Konfigurationsparametern stammt.

**5.** Verfahren nach einem der Ansprüche 1 bis 4, wobei die jeweilige Schicht der Mehrzahl von Codierern und eine jeweilige Schicht der Mehrzahl von Decodierern als neuronales Netz mit Graphen, GNN, miteinander verbunden sind.

**6.** Verfahren nach einem der Ansprüche 1 bis 5, wobei die Verlustmetrik eine Metrik des mittleren quadratischen Fehlers, MSE, ist.

**7.** Verfahren nach einem der Ansprüche 1 bis 6, wobei die Verlustmetrik einen Term des mittleren quadratischen Fehlers, MSE, und einen Korrelationsterm umfasst, der eine Korrelation zwischen den Darstellungen und dem aktuellen Wert des Konfigurationsparameters von Interesse darstellt.

**8.** Verfahren nach Anspruch 7, wobei Schritt (v) (909) das Wiederholen der Schritte (ii), (iii) und (iv) umfasst, um die Codierer und Decodierer neu zu trainieren, um den MSE-Term und den Korrelationsterm zu minimieren.

**9.** Verfahren nach Anspruch 7 oder 8, wobei der Korrelationsterm eine Kreuzkorrelation zwischen dem aktuellen Wert des Konfigurationsparameters von Interesse und einem prognostizierten Wert des Konfigurationsparameters von Interesse unter Verwendung einer linearen Regression ist.

**10.** Verfahren nach Anspruch 7 oder 8, wobei der Korrelationsterm eine mittlere Kosinusähnlichkeit zwischen dem aktuellen Wert des Konfigurationsparameters von Interesse und den Darstellungen darstellt.

**11.** Verfahren nach einem der Ansprüche 1 bis 10, wobei die Darstellung als einer Gaußschen Verteilung folgend erachtet wird, und wobei die jeweilige Darstellung für jede Zelle einen Schätzwert eines Mittelwerts und einer Varianz der Gaußschen Verteilung umfasst.

**12.** Computerimplementiertes Verfahren zum Schätzen einer Leistung eines Mobilfunknetzes unter Verwendung eines Leistungsschätzungsmodells (22), das nach einem der Ansprüche 1 bis 11 trainiert wird, wobei das Mobilfunknetz eine Mehrzahl von Zellen umfasst, und wobei das Mobilfunknetz eine Mehrzahl von Konfigurationsparametern aufweist, die pro Zelle konfigurierbar sind, wobei das Verfahren umfasst:

> (i) Erhalten (901) von aktuellen Messungen einer Mehrzahl von Leistungsparametern für die Mehrzahl von Zellen in dem Mobilfunknetz und Erhalten von aktuellen Werten der Konfigurationsparameter für die Mehrzahl von Zellen;
> (ii) Bestimmen eines oder mehrerer korrigierter Werte des Konfigurationsparameters von Interesse, der in einer oder mehreren Zellen verwendet werden soll; und
> (iii) Eingeben der aktuellen Messungen und des einen oder der mehreren korrigierten Werte des Konfigurationsparameters von Interesse in das trainierte Leistungsschätzungsmodell (22) und Betreiben des trainierten Leistungsschätzungsmodells (22), um den Satz von Schlüsselleistungsparametern zu bestimmen, die eine Auswirkung des einen oder der mehreren korrigierten Werte des Konfigurationsparameters von Interesse auf die Leistung des Mobilfunknetzes anzeigen.

**13.** Computerprogrammprodukt, das ein computerlesbares Medium mit darauf enthaltenem computerlesbarem Code umfasst, wobei der computerlesbare Code so konfiguriert ist, dass, wenn von einem geeigneten Computer Prozessor ausgeführt, der Computer oder der Prozessor dazu veranlasst werden, das Verfahren nach einem der Ansprüche 1 bis 12 durchzuführen.

**14.** Einrichtung (700), die dazu konfiguriert ist, ein Leistungsschätzungsmodells (22) zum Schätzen der Leistung eines Mobilfunknetzes zu trainieren, wobei das Leistungsschätzungsmodell (22) eine Codiererstufe (24) mit einer Mehrzahl von Codierern und eine Decodiererstufe (26) mit einer Mehrzahl von Decodierern umfasst, wobei das Netz eine Mehrzahl von Zellen umfasst, und wobei das Mobilfunknetz eine Mehrzahl von Konfigurationsparametern und einen Konfigurationsparameter von Interesse aufweist, die jeweils pro Zelle konfigurierbar sind, wobei die Einrichtung (700) dazu konfiguriert ist:

> (i) Erhalten eines Trainingsdatensatzes, wobei der Trainingsdatensatz Messungen einer Mehrzahl von Leistungsparametern für die Mehrzahl von Zellen umfasst, wobei verschiedene Werte der Konfigurationsparameter unter der Mehrzahl von Zellen verwendet werden, wobei der Trainingsdatensatz ferner jeweilige Werte der Mehrzahl von Konfigurationsparametern für die Mehrzahl von Zellen umfasst;
> (ii) Trainieren der Codierer zum Codieren des Trainingsdatensatzes in eine entsprechende Darstellung für jede Zelle, wobei jeder Codierer für eine jeweilige Zelle die Messungen der Mehrzahl von Leistungsparametern und entsprechenden Werte der Mehrzahl von Konfigurationsparametern für diese Zelle empfängt, und wobei eine Schicht von jeder der Mehrzahl von Codierern als neuronales Netz miteinander verbunden ist, das das Mobilfunknetz darstellt, so dass Informationen über Beziehungen zwischen Zellpaaren im Mobilfunknetz bei der Codierung berücksichtigt werden;

(iii) Trainieren der Decodierer zum Decodieren einer jeweiligen Darstellung, um eine Teilmenge der Mehrzahl von Leistungsparametern für die jeweilige Zelle zu bestimmen, die mit dem Konfigurationsparameter von Interesse verknüpft ist, wobei jeder Decodierer die jeweilige Darstellung und einen aktuellen Wert des Konfigurationsparameters von Interesse empfängt, wobei eine Schicht von jedem der Mehrzahl von Decodierern als neuronales Netz miteinander verbunden ist, das das Mobilfunknetzwerk darstellt, so dass Informationen über Beziehungen zwischen Zellpaaren im Mobilfunknetz bei der Decodierung berücksichtigt werden;

(iv) Bestimmen eines Wertes einer Verlustmetrik, der auf einer Differenz zwischen dem eingegebenen Trainingsdatensatz und der Ausgabe der Decodierer basiert; und

(v) Wiederholen der Vorgänge (ii), (iii) und (iv), um die Codierer und Decodierer neu zu trainieren, um einen verbesserten Wert der Verlustmetrik zu erhalten.

## Revendications

1. Procédé mis en œuvre par ordinateur pour l'apprentissage d'un modèle d'estimation des performances (22) pour estimer la performance d'un réseau cellulaire, dans lequel le modèle d'estimation des performances (22) comprend un étage d'encodage (24) comprenant une pluralité de d'encodeurs et un étage de décodage (26) comprenant une pluralité de décodeurs, dans lequel le réseau comprend une pluralité de cellules, et dans lequel le réseau possède une pluralité de paramètres de configuration, ainsi qu'un paramètre de configuration d'intérêt qui sont chacun configurables par cellule, le procédé comprenant :

   (i) l'obtention (901) d'un ensemble de données de formation, l'ensemble de données de formation comprenant des mesures d'une pluralité de paramètres de performance pour la pluralité de cellules, différentes valeurs des paramètres de configuration étant utilisées parmi la pluralité de cellules, l'ensemble de données de formation comprenant en outre des valeurs respectives de la pluralité de paramètres de configuration pour la pluralité de cellules ;

   (ii) la formation (903) des encodeurs pour coder l'ensemble de données de formation dans une représentation respective pour chaque cellule, chaque encodeur recevant, pour une cellule respective, les mesures de la pluralité de paramètres de performance et les valeurs correspondantes de la pluralité de paramètres de configuration pour cette cellule, et une couche de chacun de la pluralité d'encodeurs étant interconnectée en tant que réseau neuronal représentant le réseau cellulaire de telle sorte que les informations sur les relations entre les paires de cellules dans le réseau cellulaire soient prises en compte dans l'encodage ;

   (iii) la formation (905) des décodeurs pour décoder une représentation respective afin de déterminer un sous-ensemble de la pluralité de paramètres de performance pour la cellule respective associée au paramètre de configuration d'intérêt, chaque décodeur recevant la représentation respective et une valeur actuelle du paramètre de configuration d'intérêt, une couche de chacun de la pluralité de décodeurs étant interconnectée en tant que réseau neuronal représentant le réseau cellulaire de telle sorte que les informations sur les relations entre les paires de cellules dans le réseau cellulaire soient prises en compte dans le décodage ;

   (iv) la détermination (907) d'une valeur d'une métrique de perte qui est basée sur une différence entre l'ensemble de données de formation d'entrée et la sortie des décodeurs ; et

   (v) la répétition (909) des étapes (ii), (iii) et (iv) pour recycler les encodeurs et les décodeurs afin d'obtenir une valeur améliorée de la métrique de perte.

2. Procédé selon la revendication 1, dans lequel la pluralité de paramètres de performance sont des paramètres qui représentent la performance de la cellule dans la fourniture d'un service aux utilisateurs du réseau cellulaire.

3. Procédé selon l'une quelconque des revendications 1 ou 2, dans lequel la pluralité de paramètres de configuration sont des paramètres qui sont chacun configurables par cellule pour ajuster les performances de la cellule.

4. Procédé selon l'une quelconque des revendications 1 à 3, dans lequel le paramètre de configuration d'intérêt n'est pas l'un de la pluralité de paramètres de configuration.

5. Procédé selon l'une quelconque des revendications 1 à 4, dans lequel la couche respective de la pluralité d'encodeurs et les couches respectives de la pluralité de décodeurs sont interconnectées sous forme de réseau neuronal graphique, GNN.

6. Procédé selon l'une quelconque des revendications 1 à 5, dans lequel la mesure de perte est une mesure d'erreur quadratique moyenne, MSE.

7. Procédé selon l'une quelconque des revendications 1 à 6, dans lequel la mesure de perte comprend un terme d'erreur quadratique moyenne, EQM, et un terme de corrélation représentant une corrélation entre les représentations et la valeur actuelle du paramètre de configuration d'intérêt.

8. Procédé selon la revendication 7, dans lequel l'étape (v) (909) comprend la répétition des étapes (ii), (iii) et (iv) pour recycler les encodeurs et les décodeurs afin de minimiser le terme MSE et le terme de corrélation.

9. Procédé selon la revendication 7 ou 8, dans lequel le terme de corrélation est une corrélation croisée entre la valeur actuelle du paramètre de configuration d'intérêt et une valeur prédite du paramètre de configuration d'intérêt à l'aide d'une régression linéaire.

10. Procédé selon la revendication 7 ou 8, dans lequel le terme de corrélation est une similarité cosinus moyenne entre la valeur actuelle du paramètre de configuration d'intérêt et les représentations.

11. Procédé selon l'une quelconque des revendications 1 à 10, dans lequel la représentation est considérée comme suivant une distribution gaussienne, et dans lequel la représentation respective pour chaque cellule comprend une estimation d'une moyenne et d'une variance de la distribution gaussienne.

12. Procédé mis en œuvre par ordinateur pour estimer les performances d'un réseau cellulaire à l'aide d'un modèle d'estimation des performances (22) formé selon l'une quelconque des revendications 1 à 11, dans lequel le réseau cellulaire comprend une pluralité de cellules et possède une pluralité de paramètres de configuration configurables par cellule, le procédé comprenant :

    (i) l'obtention de mesures actuelles d'une pluralité de paramètres de performance pour la pluralité de cellules dans le réseau cellulaire et l'obtention de valeurs actuelles des paramètres de configuration pour la pluralité de cellules ;
    (ii) la détermination d'une ou plusieurs valeurs révisées du paramètre de configuration d'intérêt à utiliser dans une ou plusieurs cellules ; et
    (iii) l'entrée des mesures actuelles et d'une ou plusieurs valeurs révisées du paramètre de configuration d'intérêt dans le modèle d'estimation des performances formé (22) et le fonctionnement du modèle d'estimation de performance formé (22) pour déterminer l'ensemble de paramètres de performance clés indiquant un effet d'une ou plusieurs valeurs révisées du paramètre de configuration d'intérêt sur les performances du réseau cellulaire.

13. Produit de programme informatique comprenant un support lisible par ordinateur contenant un code lisible par ordinateur, le code lisible par ordinateur étant configuré de telle sorte que, lors de son exécution par un ordinateur ou processeur approprié, l'ordinateur ou le processeur est amené à réaliser le procédé selon l'une quelconque des revendications 1 à 12.

14. Appareil (700) configuré pour former un modèle d'estimation des performances (22) pour estimer la performance d'un réseau cellulaire, dans lequel le modèle d'estimation des performances (22) comprend un étage d'encodage (24) comprenant une pluralité d'encodeurs et un étage de décodage (26) comprenant une pluralité de décodeurs, dans lequel le réseau comprend une pluralité de cellules, et dans lequel le réseau cellulaire possède une pluralité de paramètres de configuration et un paramètre de configuration d'intérêt qui sont chacun configurables par cellule, l'appareil (700) configuré pour :

    (i) obtenir un ensemble de données de formation, l'ensemble de données de formation comprenant des mesures d'une pluralité de paramètres de performance pour la pluralité de cellules, différentes valeurs des paramètres de configuration étant utilisées parmi la pluralité de cellules, l'ensemble de données de formation comprenant en outre des valeurs respectives de la pluralité de paramètres de configuration pour la pluralité de cellules ;
    (ii) former les encodeurs à coder l'ensemble de données de formation dans une représentation respective pour chaque cellule, chaque encodeur recevant, pour une cellule respective, les mesures de la pluralité de paramètres de performance et les valeurs correspondantes de la pluralité de paramètres de configuration pour cette cellule, et une couche de chacun de la pluralité d'encodeurs étant interconnectée en tant que réseau neuronal représentant le réseau cellulaire de telle sorte que les informations sur les relations entre les paires de cellules dans le réseau cellulaire soient prises en compte dans l'encodage ;

(iii) former les décodeurs à décoder une représentation respective pour déterminer un sous-ensemble de la pluralité de paramètres de performance pour la cellule respective associée au paramètre de configuration d'intérêt, chaque décodeur recevant la représentation respective et une valeur actuelle du paramètre de configuration d'intérêt, une couche de chacun de la pluralité de décodeurs étant interconnectée en tant que réseau neuronal représentant le réseau cellulaire de telle sorte que les informations sur les relations entre les paires de cellules dans le réseau cellulaire soient prises en compte dans le décodage ;

(iv) déterminer une valeur d'une métrique de perte basée sur une différence entre l'ensemble de données de formation d'entrée et la sortie des décodeurs ; et

(v) répéter les opérations (ii), (iii) et (iv) pour recycler les encodeurs et les décodeurs afin d'obtenir une valeur améliorée de la métrique de perte.

Fig. 1

EP 4 515 913 B1

Fig. 2

Fig. 3

Fig. 4(a)

Fig. 4(b)

Fig. 5

EP 4 515 913 B1

Non-RT RIC

rApp1

rApp2

...

AI-DRIVEN NETWORK PARAMETER CHANGE PREDICTOR

66

62

68

SMO Framework

64

O-RAN BASED NETWORK

60

Fig. 6

EP 4 515 913 B1

Fig. 7

EP 4 515 913 B1

VIRTUALIZATION ENVIRONMENT 800

APPLICATION / VIRTUAL APPLIANCE /
VIRTUAL NODE OR SERVER / INSTANCE
802

MANAGEMENT AND
ORCHESTRATION
810

VM 808A

VM 808B

VIRTUALIZATION LAYER 806

HARDWARE
804

CONTROL SYSTEM
812

Fig. 8

Fig. 9

## REFERENCES CITED IN THE DESCRIPTION

**Patent documents cited in the description**

- US 2019392302 A1

- WO 2021089864 A1

**Non-patent literature cited in the description**

- **ALESSIO ZAPPONE**. *Wireless Networks Design in the Era of Deep Learning: Model-Based, AI-Based, or Both?*
- **CLAUDIA PARERA et al.** *Transferring knowledge for tilt-dependent radio map prediction*
- **MARTIN SIMONOVSKY** ; **NIKOS KOMODAKIS**. Dynamic Edge-Conditioned Filters in Convolutional Neural Networks on Graphs. *ArXiv*, April 2017, https://arxiv.org/abs/1704.02901

- **KIHYUK SOHN** ; **HONGLAK LEE** ; **XINCHEN YAN**. Learning Structured Output Representation using Deep Conditional Generative Models. *Advances in Neural Information Processing Systems*, vol. 28, https://papers.nips.cc/paper/2015/hash/8-d55a249e6baa5c06772297520da2051-Abstract. html